# EUROPÄISCHE PATENTANMELDUNG

(11) **EP 1 884 924 A1**
(43) Veröffentlichungstag der Anmeldung: **06.02.2008**
(21) Anmeldenummer: 07112035.6
(22) Anmeldetag: 09.07.2007
(51) Int. Cl.: G10L 15/22

(54) **Verfahren zum Erzeugen einer kontextbasierten Sprachdialogausgabe in einem Sprachdialogsystem**

(30) Priorität: 03.08.2006 DE 102006036338
(71) Anmelder: SIEMENS AKTIENGESELLSCHAFT, 80333 München (DE)
(72) Erfinder: Block, Hans-Ulrich, 81675 München (DE); Schachtl, Stefanie, 82239 Alling (DE)

(57) **Zusammenfassung**

Die Benutzerfreundlichkeit von Sprachdialogsystemen wird erhöht, indem der Benutzer während des Dialogs kontextbasiert auf zusätzliche im System modellierte Themen aufmerksam gemacht wird, so dass diese Zusatzinformationen einen inhaltlichen Bezug zu den momentanen Aktionen des Benutzers haben. Auf diese Weise kann ein Konversationscharakter in dem Sprachdialogsystem imitiert werden, der bis zu einem gewissen Grad eine intelligente, lockere Unterhaltung mit unterschiedlichen Themensträngen suggerieren kann.

## Beschreibung

Die Erfindung betrifft ein Verfahren zum Erzeugen einer kontextbasierten Sprachdialogausgabe in einem Sprachdialogsystem und ein Verfahren zur Erstellung eines Sprachdialogsystems aus mehreren Sprachdialoganwendungen.

Sprachdialogsysteme für Datenbankzugriffe, welche Informationszugriffe sowie eine Steuerung von Kommunikationsapplikationen via Sprachkommunikation ermöglichen, sind an Schnittstellen zu vielen computergestützten Anwendungen bekannt. Anwendungen beziehungsweise Hintergrundapplikationen, wie beispielsweise ein technisches Gerät der Unterhaltungselektronik, ein telefonisches Auskunftssystem (Bahn, Flug, Kino etc.), ein computergestütztes Transaktionssystem (Homebankingsystem, elektronische Warenbestellung etc.) sind in zunehmendem Maße über derartige Sprachdialogsysteme als Zugangssysteme bedienbar. Derartige Sprachdialogsysteme können in Hardware, Software oder in einer Kombination daraus realisiert werden.

Der Dialogverlauf zur Erzeugung von anwendungsspezifischen Dialogzielen wird hierbei über das Sprachdialogsystem gesteuert, welches Interaktionen zwischen einer Dialogmanagementeinheit und dem jeweiligen Benutzer verwaltet. Die Informationseingabe beziehungsweise Informationsausgabe erfolgt hierbei über eine Eingabeeinheit sowie über eine Ausgabeeinheit, welche mit der Dialogmanagementeinheit verbunden sind.

Üblicherweise wird eine von einem Benutzer erzeugte Benutzeräußerung in Form eines Sprachsignals über die Eingabeeinheit erfasst und in der Dialogmanagementeinheit weiter verarbeitet. Mit der Eingabeeinheit ist beispielsweise eine Spracherkennungseinheit verbunden, über welche eine Ermittlung von einer in der erfassten Benutzeräußerung enthaltenen Aktionsinformation realisiert wird. Zur Ausgabe von so genannten Aktions- oder Informationsprompts, das heißt vorzugsweise sprachbasierten Anweisungen oder Informationen an den Benutzer, kann die Ausgabeeinheit eine Sprachsyntheseeinheit aufweisen und über eine "Text-to-Speech"-Einheit zur Umwandlung von Text in Sprache verfügen.

Über unterschiedliche Hintergrundapplikationen oder Sprachdialoganwendungen können in einem Sprachdialogsystem unterschiedliche Informationen abgefragt oder verschiedene Ziele verfolgt werden. Eine solche Hintergrundapplikation ist hierbei als eine endliche Menge von Transaktionen aufzufassen, wobei jeder Transaktion eine endliche Menge von Transaktionsparametern zugeordnet ist. Den Transaktionsparametern wiederum sind jeweils eine endliche Menge von Parameterwerten zugeordnet. Die Transaktionsparameter sind dem Sprachdialogsystem bekannt und werden über eine spezifisch für die einzelnen Transaktionsparameter vorgesehene Grammatik im Dialog mit dem Benutzer erfasst. Hierbei kann der Benutzer beispielsweise die gewünschte Transaktion und den zugeordneten Transaktionsparameter in einem Satz benennen oder auch nicht. Im ersten Fall kann die Transaktion sofort durchgeführt werden und im zweiten Fall ist die Erfassung der noch unbekannten Parameter im Dialog mit dem Benutzer erforderlich. Falls durch die Benutzeräußerung keine Transaktion eindeutig bestimmbar ist, führt das System automatisch einen Klärungsdialog zur Ermittlung der gewünschten Transaktion durch. Gleiches gilt für unklare und unvollständige Benutzerangaben hinsichtlich eines Transaktionsparameters.

Jeder Hintergrundapplikation beziehungsweise Sprachdialoganwendung ist eine Dialogspezifikation zugeordnet, die eine Transaktionsdatenbasis, eine Parameterdatenbasis sowie eine Grammatikdatenbasis aufweist.

Jede einzelne Hintergrundapplikation wird jeweils durch ein zugeordnetes Sprachdialogsystem unter Auswertung der jeweils zugeordneten Dialogspezifikation ausgeführt. Es ist beispielsweise bekannt mehrere unterschiedliche Hintergrundapplikationen beziehungsweise Sprachdialoganwendungen über ein gemeinsames Sprachdialogsystem einheitlich zu bedienen. Ein solches universelles Sprachdialogsystem setzt jedoch voraus, dass der Benutzer mit den einzelnen Anwendungen beziehungsweise Funktionalitäten bereits vertraut ist, um das universelle Sprachdialogsystem im vollen Umfang nutzen zu können. Bisher besteht für einen Benutzer eines solchen Sprachdialogsystem nur die Möglichkeit, sich in einem Informationsprompt sämtliche Anwendungen aufzählen zu lassen, die in dem jeweiligen Sprachdialogsystem zur Verfügung stehen.

Aus Benutzersicht ist es demnach wünschenswert, die Benutzerfreundlichkeit derartiger Sprachdialogsysteme dadurch zu erhöhen, dass der Benutzer während des Dialogs kontextbasiert auf zusätzliche im System modellierte Themen aufmerksam gemacht wird, so dass die Zusatzinformationen einen inhaltlichen Bezug zu den momentanen Aktionen des Benutzers haben. Auf diese Weise kann ein Konversationscharakter in dem Dialogsystem imitiert werden, der bis zu einen gewissen Grad eine intelligente, lockere Unterhaltung mit unterschiedlichen Themensträngen suggerieren kann.

Die Aufgabe der vorliegenden Erfindung besteht somit darin, ein Verfahren anzugeben, mit dem eine kontextbasierte Sprachdialogausgabe in einem Sprachdialogsystem erzeugt wird. Bei der Schaffung eines Verfahrens mit einem solchen konversationellen Dialogverhalten sind zudem Vorgaben im Hinblick auf die beschränkte Wortschatzgröße von verfügbaren Spracherkennungssystemen zu beachten.

Weiterhin besteht eine Aufgabe der vorliegenden Erfindung darin, ein Verfahren anzugeben, mit dem Sprachdialoganwendungen identifiziert und zusammengeführt werden können, die für ein solches Themen übergreifende kontextbasiertes Sprachdialogsystem geeignet sind.

Erfindungsgemäß wird diese Aufgabe durch ein Verfahren nach Anspruch 1, ein Verfahren nach Anspruch 5 und ein System nach Anspruch 14 gelöst. Vorteilhafte Weiterbildungen der Erfindung sind in den abhängigen Ansprüchen angegeben.

Erfindungsgemäß sind einem Sprachdialogsystem Transaktionen und Transaktionsparameter zugeordnet und den Transaktionsparametern sind jeweils eine Menge von Parameterwerten zugeordnet. In dem erfindungsgemäßen Verfahren zum Erzeugen einer kontextbasierten Sprachdialogausgabe ist ein Transaktionsparameter einer ersten Transaktion einem ersten Parameterwert zugewiesen. Zumindest eine zweite Transaktion wird mit einem zweiten Transaktionsparameter ermittelt, dessen Menge von Parameterwerten den ersten Parameterwert umfasst. Ein zweiter Parameterwert eines weiteren Transaktionsparameters der zweiten Transaktion wird ermittelt, wobei der zweite Parameterwert dem ersten Parameterwert thematisch zuordenbar ist. Schließlich wird eine Sprachdialogausgabe erzeugt, welche zumindest den ersten Parameterwert und den zweiten Parameterwert aufweist. Das Verfahren hat den Vorteil, dass es dem Benutzer den Eindruck einer freieren Kommunikation mit dem Sprachdialogsystem vermittelt und somit die Benutzerakzeptanz des Sprachdialogsystems erheblich gesteigert wird. Des Weiteren hat das Verfahren die vorteilhafte Wirkung, dass in Sprachdialogsystemen oder Sprachdialogportalen mit einer großen Anzahl von Sprachdialoganwendungen und/oder einer großen Anzahl von modellierten Themen, ein langer Monolog des Systems zur Erläuterung der von dem Sprachdialogsystem bereitgestellten Anwendungen vermieden werden kann, da dieser Monolog für einen Benutzer oft ermüdend wirkt und nur schwer zu verstehen ist. Stattdessen wird durch das erfindungsgemäß Verfahren der Benutzer anhand der automatisch erzeugten Sprachdialogausgaben auf unterhaltsame Art auf weitere Möglichkeiten hingewiesen, die ihm durch das System bereitgestellt werden.

Gemäß dem erfindungsgemäßen Verfahren zur Erstellung eines Sprachdialogsystems aus mehreren Sprachdialoganwendungen wird mit Hilfe eines vorgebbaren Kriteriums eine Verwandtschaftsprüfung zwischen einzelnen Sprachdialoganwendungen vorgenommen. Die Sprachdialoganwendungen, welche das vorgebbare Kriterium erfüllen, werden in ein Sprachdialogsystem zusammengeführt. Dieses Verfahren hat den Vorteil, dass auf einfache Weise Sprachdialoganwendungen identifiziert und zusammengeführt werden können, welche in einem thematischen und inhaltlichen Zusammenhang stehen und somit im Rahmen eines konversationellen Sprachdialogsystems dem Benutzer die Orientierung und das effektive Ausnutzen der angebotenen Möglichkeiten des Sprachdialogsystems erheblich erleichtern.

Die vorliegende Erfindung wird nachfolgend an Ausführungsbeispielen anhand der Zeichnungen näher erläutert.

Es zeigen
- Figur 1: eine schematische Darstellung eines Verfahrens zur Erstellung eines Sprachdialogsystems aus mehreren Sprachdialoganwendungen,
- Figur 2: eine schematische Darstellung eines Verfahrens zum Erzeugen einer kontextbasierten Sprachdialogausgabe in einem Sprachdialogsystem,
- Figur 3: standardisierte Tabellen mit Informationen über Königreiche, deutsche Bundesländer und Spielbanken.

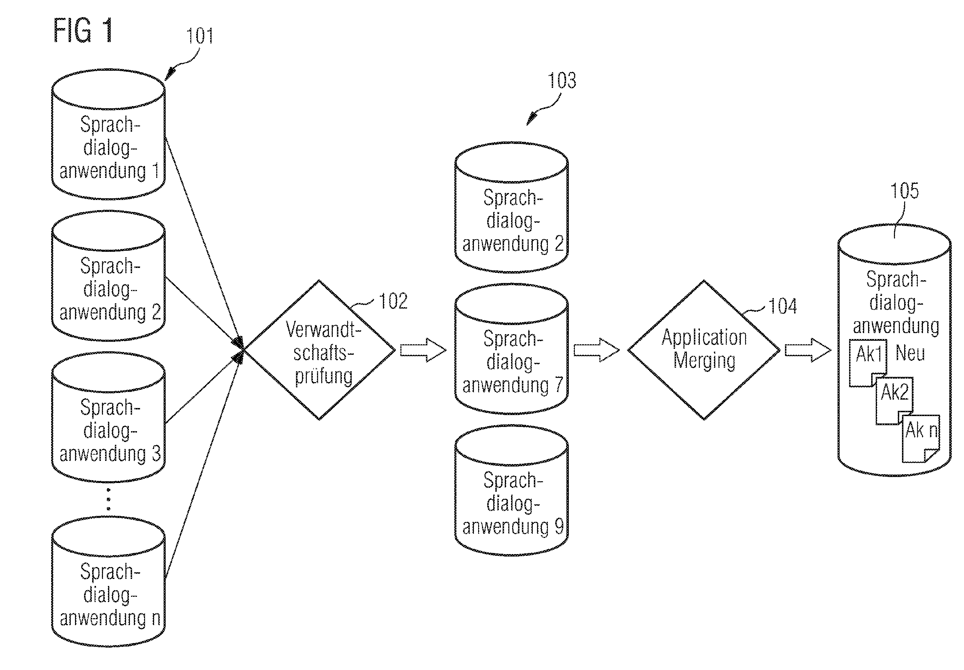

Die Figur 1 zeigt in einer schematischen Darstellung ein Verfahren zur Erstellung eines Sprachdialogsystems aus mehreren Sprachdialoganwendungen. In einem ersten Schritt wird aus einer Menge von Sprachdialoganwendungen 101 automatisch eine Teilmenge von Sprachdialoganwendungen herausgefiltert, die aufgrund vorgebbarer Kriterien als miteinander verwandt eingestuft werden 102. Diese Sprachdialoganwendungen können wiederum selbst automatisch generiert worden sein. Ein Kriterium für die Auswahl von Sprachdialoganwendungen kann beispielsweise sein, dass die Wortschätze beziehungsweise Vokabularien der einzelnen Sprachdialoganwendungen zu einem signifikanten Teil übereinstimmen. Hierbei kann beispielsweise experimentell ermittelt werden, wie groß die Überschneidung der einzelnen Vokabularien sein muss, damit die Sprachdialoganwendungen als thematisch verwandt eingestuft werden können. Die derart ermittelten Sprachdialoganwendungen 103 werden in einem weiteren Schritt, beispielsweise mithilfe eines Application-Mergers 104, zu einem Sprachdialogsystem 105 zusammengeführt.

In dem neu generierten Sprachdialogsystem gibt es dann Transaktionen, die den ehemaligen Sprachanwendungen entsprechen. Im einfachsten Fall, wenn jede ursprüngliche Sprachdialoganwendung nur eine Transaktion hatte und alle Sprachdialoganwendungen nicht ähnlich im Sinne des Merging waren, gibt es in dem neu generierten Sprachdialogsystem so viele Transaktionen wie Sprachdialoganwendungen gemergt beziehungsweise zusammengeführt wurden. Beispielsweise gibt es drei Sprachdialoganwendungen, die automatisch aus drei verschiedenen Tabellen generiert wurden. Die erste Tabelle enthält Informationen über europäische Königreiche, eine zweite Tabelle Informationen mit statistischen und allgemeinen Daten zu den deutschen Bundesländern und eine dritte Tabelle Informationen zu Spielbanken in Deutschland. Die drei Sprachdialoganwendungen, die aus diesen Tabellen erzeugt wurden, werden in dem in Figur 1 gezeigten Prozess aufgrund ihres zumindest teilweise gemeinsamen Wortschatzes als Kandidaten für das Application-Merging identifiziert. In dem Verfahrensschritt des Application-Merging 104 wird hieraus automatisch ein neues Sprachdialogsystem erzeugt, welches die drei Transaktionen "Königreiche", "Bundesländer" und "Spielbanken" aufweist. Die Transaktion "Königreiche" hat die Transaktionsparameter "Zeitraum", "Dynastie" und "Königreich" und der Transaktionsparameter "Dynastie" beispielsweise weist die Parameterwerte "Bourbonen", "Wittelsbacher" und "Tudor" auf.

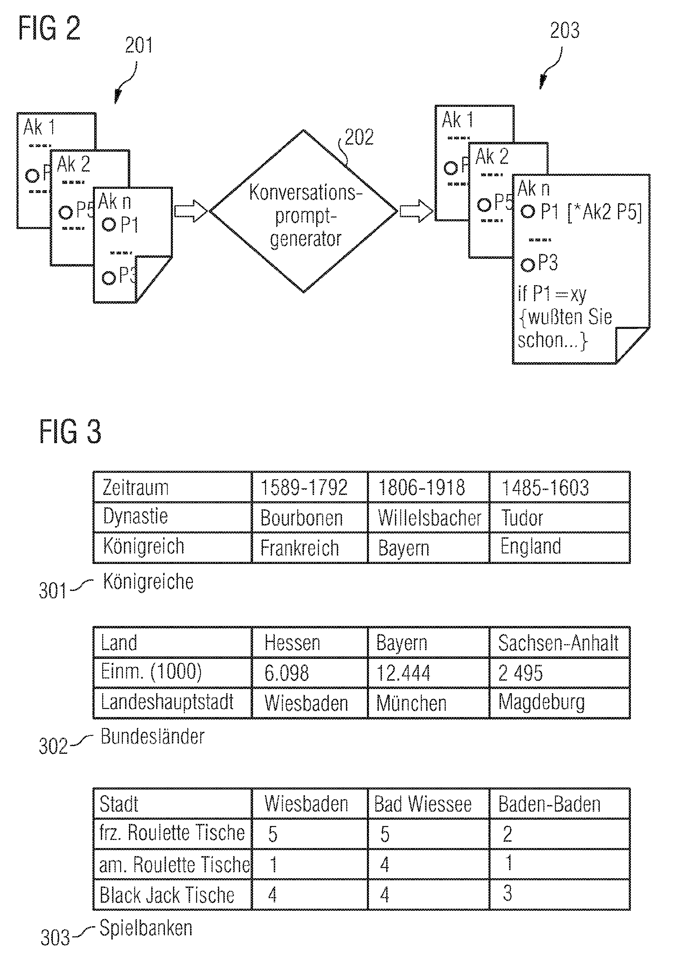

Die Figur 2 zeigt in einer schematischen Darstellung ein Verfahren zum Erzeugen einer kontextbasierten Sprachdialogausgabe in einem Sprachdialogsystem. In einem ersten Schritt 201 sei ein erster Parameterwert bekannt. Dieser Parameterwert kann beispielsweise in einer Spracheingabe eines Benutzers identifiziert worden sein. Es werden nun in dem ersten Schritt die Parameterwerte aller übrigen Transaktionen auf Übereinstimmungen mit dem ersten Parameterwert überprüft. Auf Grundlage der gefundenen Übereinstimmungen wird in einem Konversationspromptgenerator 202 eine Sprachdialogausgabe generiert, in der auf weitere vom System angebotene Transaktionen hingewiesen wird. Diese Sprachdialogausgabe wird in einem letzten Schritt 203 durch das Sprachdialogsystem ausgegeben.

Das Verfahren zur Ermittlung der Konversationsprompt kann beispielsweise folgendermaßen ablaufen:

In einem ersten Schritt wird überprüft, ob es weitere Transaktionen in dem Sprachdialogsystem gibt, die ein Transaktionsparameter aufweisen, der ebenfalls den ersten Parameterwert annehmen kann. Anschließend wird ein weiterer Transaktionsparameter der gefundenen Transaktion gewählt und derjenige Parameterwert bestimmt, der dem ersten Parameterwert thematisch zuordenbar ist. Letztlich wird ein Konversationsprompt erzeugt, in welchem auf den mit dem ersten Parameterwert in Zusammenhang stehenden zweiten Parameterwert hingewiesen wird.

Anhand von Figur 3 wird im Folgenden eine beispielhafte Sprachdialogausgabe vorgestellt, welche mit dem erfindungsgemäßen Verfahren erzeugt wird. Zunächst stellt sich das Sprachdialogsystem in einem Begrüßungsprompt gegenüber dem Benutzer vor, beispielsweise mit den Worten "Guten Tag, hier ist Ihr allgemeines Auskunftssystem. Ich kann Ihnen über Königreiche 301 Auskunft geben und zwar über Zeitraum, Dynastie und Königreich. Fragen Sie mich doch zum Beispiel mal, was weißt Du über Bourbonen?". Auf diese Weise wird dem Benutzer zu Beginn des Dialogs ein Ausschnitt von möglichen Informationen vermittelt, die über das Sprachdialogsystem abgefragt werden können.

Der Benutzer wendet sich daraufhin an das System mit der Frage "Wie hießen die Könige von Bayern?". In diesem Fall erkennt das Sprachdialogsystem den Parameterwert "Bayern" und sucht gemäß dem in Figur 2 beschriebenen Verfahren in den übrigen Transaktionen "Bundesländer" 302 und "Spielbanken" 303 nach diesem ersten Parameterwert "Bayern". Durch das Sprachdialogsystem wird in der Transaktion "Bundesländer" 302 unter dem Transaktionsparameter "Land" der Parameterwert "Bayern" gefunden. Hieraufhin wählt das Sprachdialogsystem einen weiteren Parameterwert aus der Transaktion "Bundesländer" 302 aus, welcher dem ersten Parameterwert "Bayern" zuordenbar ist. In diesem Ausführungsbeispiel wird als zweiter Parameterwert "München" aus dem Transaktionsparameter "Landeshauptstadt" der Transaktion "Bundesländer" 302 ausgewählt. Schließlich generiert das Sprachdialogsystem den Konversationsprompt "Übrigens, wussten Sie schon, dass *+Transaktionsparameter2* + *von +erster Parameterwert+zweiter Parameterwert+ ist?",* so dass durch das Sprachdialogsystem die Sprachausgabe "Übrigens, wussten Sie schon, dass die Landeshauptstadt von Bayern München ist?". Es bleibt dabei dem Fachmann überlassen, ob das Sprachdialogsystem direkt im Anschluss an die Benutzerfrage den Konversationsprompt ausgibt und anschließend die Frage des Benutzers beantwortet oder zunächst die Frage beantwortet und anschließend den Konversationsprompt ausgibt.

So könnte ein Dialog eines Benutzers mit einem Sprachdialogsystem auch nach dem folgenden Muster ablaufen, welcher wieder auf die in Figur 3 tabellarisch dargestellten Informationen zurückgreift.
- Benutzer:: "Von welchem Land ist Wiesbaden die Hauptstadt?"
- System:: "Auf Ihre Frage nach Land, Wiesbaden, habe ich folgende Antwort gefunden: Hessen. Übrigens, wussten Sie schon, dass die Anzahl der französischen Roulett-Tische von Wiesbaden 5 ist?"
- Benutzer:: "Und wo kann ich Black Jack spielen?"
- System:: "Auf Ihre Frage nach Stadt, Black Jack, habe ich folgende Antwort gefunden: Wiesbaden, Bad Wiessee und Baden Baden."

Die vorliegende Erfindung ist nicht auf die hier beschriebenen Ausführungsbeispiele beschränkt.

## Patentansprüche

1. Verfahren zum Erzeugen einer kontextbasierten Sprachdialogausgabe in einem Sprachdialogsystem, wobei
- dem Sprachdialogsystem Transaktionen und Transaktionsparameter zugeordnet sind und
- den Transaktionsparametern jeweils eine Menge von Parameterwerten zugeordnet sind,
**dadurch gekennzeichnet, dass**
- ein Transaktionsparameter einer ersten Transaktion einem ersten Parameterwert zugewiesen ist,
- zumindest eine zweite Transaktion mit einem zweiten Transaktionsparameter ermittelt wird, dessen Menge von Parameterwerten den ersten Parameterwert umfasst,
- ein zweiter Parameterwert eines weiteren Transaktionsparameters der zweiten Transaktion ermittelt wird, wobei der zweite Parameterwert dem ersten Parameterwert thematisch zuordenbar ist,
- eine Sprachdialogausgabe erzeugt wird, welche zumindest den ersten Parameterwert und den zweiten Parameterwert aufweist.

2. Verfahren nach Anspruch 1, wobei
- das Sprachdialogsystem mehrere Sprachdialoganwendungen umfasst,
- die erste Transaktion von einer ersten Sprachdialoganwendung umfasst wird und die zweite Transaktion von einer zweiten Sprachdialoganwendung umfasst wird.

3. Verfahren nach Anspruch 1, wobei
das Verfahren ausgelöst wird, wenn der erste Parameterwert in einer Spracheingabe eines Benutzers identifiziert wurde.

4. Verfahren nach Anspruch 1, wobei
das Verfahren ausgelöst wird, wenn der erste Parameterwert in einer Spracheingabe eines Benutzers identifiziert wurde und die damit einhergehende Aktion durch das Sprachdialogsystem ausgeführt worden ist.

5. Verfahren zur Erstellung eines Sprachdialogsystems aus mehreren Sprachdialoganwendungen, wobei
- mit Hilfe eines vorgebbaren Kriteriums eine Verwandtschaftsprüfung zwischen einzelnen Sprachdialoganwendungen vorgenommen wird,
- die Sprachdialoganwendungen, welche das vorgebbare Kriterium erfüllen, in ein Sprachdialogsystem zusammengeführt werden.

6. Verfahren nach Anspruch 5, wobei
- den Sprachdialoganwendungen jeweils Transaktionen und Transaktionsparameter zugeordnet sind,
- jeweils einer Transaktion zumindest eine Grammatik zugeordnet ist und die einer Transaktion zugeordnete Grammatik, die jeweils einen Transaktionsparameter zuordenbaren Parameterwerte aufweist.

7. Verfahren nach Anspruch 5, wobei
das vorgebbare Kriterium eine zumindest teilweise funktionale Übereinstimmung zwischen den Transaktionen der Sprachdialoganwendungen und/oder eine zumindest teilweise semantische Übereinstimmung zwischen den Transaktionsparametern der Sprachdialoganwendungen ist.

8. Verfahren nach Anspruch 5, wobei
- zur Ermittlung einer semantischen Übereinstimmung zwischen zwei Transaktionsparametern, die den Transaktionsparametern zuordenbaren und in der jeweiligen Grammatik vorgesehenen Parameterwerte miteinander verglichen werden und
- abhängig vom Vergleichsergebnis eine semantische Übereinstimmung zwischen zwei Transaktionsparametern festgestellt wird oder nicht.

9. Verfahren nach Anspruch 5, wobei
- zur Ermittlung einer funktionalen Übereinstimmung zwischen zwei Transaktionen, die den Transaktionen zugeordneten Grammatiken miteinander verglichen werden und
- abhängig vom Vergleichsergebnis eine funktionale Übereinstimmung zwischen zwei Transaktionen festgestellt wird oder nicht.

10. Verfahren nach Anspruch 5, wobei
das vorgebbare Kriterium eine zumindest teilweise Übereinstimmung des Wortschatzes der Sprachdialoganwendung ist.

11. Verfahren nach Anspruch 5, wobei
die in dem Sprachdialogsystem zusammengeführten Transaktionen in einer gemeinsamen Transaktionsdatenbasis gespeichert werden.

12. Verfahren nach Anspruch 5, wobei
die in dem Sprachdialogsystem zusammengeführten Transaktionsparameter in einer gemeinsamen Transaktionsparameterdatenbasis gespeichert werden.

13. Verfahren nach Anspruch 5, wobei
die in dem Sprachdialogsystem zusammengeführten Grammatiken in einer gemeinsamen Grammatikdatenbasis zusammengefasst werden.

14. Sprachdialogsystem mit Mitteln, welche geeignet sind, ein Verfahren nach einem der Ansprüche 1 bis 4 und/oder ein Verfahren nach einem der Ansprüche 5 bis 13 auszuführen.
